# EUROPÄISCHE PATENTSCHRIFT

(11) **EP 0 457 770 B1**
(45) Veröffentlichungstag und Bekanntmachung des Hinweises auf die Patenterteilung: **29.09.1993**
(21) Anmeldenummer: 90901754.3
(22) Anmeldetag: 24.01.1990
(51) Int. Cl.: G03B 19/18

(54) **STEUER- UND REGELEINRICHTUNG FÜR DIE BELICHTUNG UND TRANSPORTGESCHWINDIGKEIT EINES LAUFBILDFILMS IN EINER LAUFBILDKAMERA**
DEVICE FOR CONTROLLING AND REGULATING THE ILLUMINATION AND FEED SPEED OF A MOTION PICTURE FILM IN A MOTION PICTURE CAMERA
DISPOSITIF POUR COMMANDER ET REGULER L'ECLAIRAGE ET LA VITESSE D'ENTRAINEMENT D'UN FILM CINEMATOGRAPHIQUE DANS UNE CAMERA

(30) Priorität: 08.02.1989 DE 3903625; 04.12.1989 DE 3940408
(43) Veröffentlichungstag der Anmeldung: 27.11.1991
(73) Patentinhaber: ARNOLD & RICHTER CINE TECHNIK GMBH & CO. BETRIEBS KG., D-80799 München (DE)
(72) Erfinder: NGUYEN-NHU, Anh, D-8044 Unterschleissheim (DE)
(74) Vertreter: Maikowski, Michael, Dipl.-Ing. Dr.
(86) Internationale Anmeldenummer: DE9000047
(87) Internationale Veröffentlichungsnummer: WO9009618

(56) Entgegenhaltungen:
- DE-A- 2 260 235
- DE-C- 2 848 676
- US-A- 4 000 941
- US-A- 4 046 464
- US-A- 4 458 992

## Beschreibung

Die Erfindung betrifft eine Steuer- und Regeleinrichtung für die Transportgeschwindigkeit eines Films sowie für den Blendenöffnungswinkel einer Umlaufblende gemäß dem Oberbegriff des Anspruchs 1.

Aus der DE-C-28 48 676 ist eine Laufbildkamera bekannt, bei der die Bildfolgefrequenz bzw. Transportgeschwindigkeit des Laufbildfilms frei wählbar oder vorprogrammierbar ist sind und die Blendeneinstellung der Laufbildkamera bei einer Änderung der Einstellung der Bildfolgefrequenz zur Anpassung der Belichtung des Laufbildfilms nachgeführt wird. Zu diesem Zweck sind die Motorsteuerung der Laufbildkamera und eine mit dem Blendenverstellmotor verbundene Schaltung mit dem Ausgang einer Steuerschaltung verbunden, die wiederum mit einer Generatorschaltung verbunden ist, in die die gewünschte Bildfolgefrequenz und zusätzlich eine Übergangszeit von einer Bildfolgefrequenz zur anderen eingebbar ist.

Die bekannte Steuerschaltung gibt innerhalb der gewählten Übergangszeit ein der gewählten Bildfolgefrequenz entsprechendes Signal an die mit dem Blendenverstellmotor gekoppelte Schaltung zur entsprechenden Änderung der Kamerablende ab. Somit ist bei dieser Steuerschaltung sowohl die Transportgeschwindigkeit programmierbar als auch die übergangszeit zwischen vorwählbaren Bildfolgefrequenzen unter Berücksichtigung der Blendenanpassung wählbar.

Neben einer konstanten Filmbelichtung und einer frei wählbaren Übergangszeit von einer Bildfolgefrequenz oder Filmtransportgeschwindigkeit zur anderen ist es in vielen Anwendungsfällen jedoch üblich, aufeinanderfolgende Filmsequenzen vor der Aufnahme festzulegen und demzufolge erwünscht, diese festgelegten Aufnahmesequenzen nacheinander abrufen zu können, ohne die einzelnen Änderungen an der Laufbildkamera einstellen zu müssen.

Aus der DE-A-28 50 065 ist eine Filmaufnahmekamera bekannt, die ein Greiferwerk, eine rotierende Blende und eine Stachelwalze aufweist, die mit jeweils einem gesonderten Antriebsmotor verbunden sind, wobei die Antriebsmotore über eine Steueranordnung untereinander gekoppelt sind. Bei der bekannten Filmaufnahmekamera ist die Bildfrequenz der Kamera frei wählbar, während die Blendeneinstellung an der Filmkamera in Abhängigkeit von den frei gewählten Bildfolgefrequenzen erfolgt.

Durch den mechanisch unabhängig voneinander erfolgenden Antrieb des Greiferwerks mit einem Greifermotor, der verstellbaren Umlaufblende mit einem Sektorblendenmotor und der Filmwickeleinrichtungen mittels eines Stachelwalzenmotors werden die Betriebsgeräusche herabgesetzt und eine möglichst exakte Regelung der Filmtransportgeschwindigkeit, des Blendenverstellsektors und der Filmwickeleinheit angestrebt. Zu diesem Zweck sind die Antriebsmotore mit Istwert-Erfassungseinrichtungen in Form von fotoelektrischen Sensoren gekoppelt, die ein entsprechendes Istwertsignal an Komparatoren abgeben, die zusätzlich mit den jeweils eingestellten Sollwerten beaufschlagt sind.

Aus der DE-A-28 32 033 ist ein Steuersystem für eine Laufbildkamera bekannt, das einen programmierbaren Mikrocomputer enthält, der die verschiedenen Kamera-Baugruppen entsprechend den gewünschten Ablauffunktionen wie Normallauf mit Ton- oder Stummkassette, Einzelbildlauf, Timerfunktion, Uberblendung oder Ab- und Aufblendung ansteuert. Dadurch wird eine bedienerfreundliche Kamera geschaffen, die Fehlbedienungen verhindern und eine Vielzahl von Steuerfunktionen ermöglichen soll.

Beim professionellen Einsatz von Laufbildkameras wird häufig gefordert, die Belichtungszeit des Laufbildfilmes bei unterschiedlichen Filmtransportgeschwindigkeiten im Filmaufnahmebetrieb innerhalb vorgegebener Grenzen konstant zu halten, so daß bspw. auch bei einer Erhöhung der Filmtransportgeschwindigkeit für Zeitlupeneffekte eine ausreichende Belichtung des Laufbildfilmes sichergestellt ist. Erforderlich hierfür ist eine motorisch verstellbare Umlaufblende, die im Filmaufnahmebetrieb eine Veränderung des Blendenöffnungswinkels gestattet, so daß eine ausreichende Belichtungszeit für jedes Filmbild des Laufbildfilmes sichergestellt ist.

In vielen Anwendungsfällen wird zusätzlich gewünscht, eine ausreichende Belichtungszeit des Laufbildfilmes im Filmaufnahmebetrieb, deren obere und untere Grenze für künstlerische Gestaltungszwecke ausgenutzt wird, bei vorgegebenen Szenenfrequenzen nach einem bestimmten Programm ablaufen zu lassen, so daß bspw. bei einem Schwenken der Kamera und unterschiedlicher Ausleuchtung des Aufnahmeobjekts oder bei einem Wechsel der Filmtransportgeschwindigkeit eine in Grenzen konstante Belichtungszeit gewährleistet ist.

Aufgabe der vorliegenden Erfindung ist es, eine Steuerund Regeleinrichtung für eine Laufbildkamera zu schaffen, die im Filmaufnahmebetrieb eine vorgegebene Belichtungszeit bei unterschiedlichen Filmtransportgeschwindigkeiten oder variierenden Lichtverhältnissen gewährleistet, vorgebbare Übergangszeiten von einer Filmtransportgeschwindigkeit zur anderen ermöglicht und zur Durchführung festgelegter Bildaufnahmesequenzen ein Maximum an Bedienungsfreundlichkeit sicherstellt.

Diese Aufgabe wird durch das kennzeichnende Merkmal des Anspruchs 1 gelöst.

Die erfindungsgemäße Lösung stellt sicher, daß im Filmaufnahmebetrieb die Belichtungszeit des Laufbildf ilmes bei veränderlichen Laufgeschwindigkeiten oder unterschiedlichen Belichtungsverhältnissen in vorgegebenen Grenzen konstant gehalten wird, so daß bspw. bei einer Erhöhung der Filmtransportgeschwindigkeit für Zeitlupeneffekte oder bei einem Schwenken der Laufbildkamera mit unterschiedlicher Belichtung des Aufnahmeobjekts eine ausreichende Belichtung des Laufbildfilms gewährleistet und die Möglichkeit zusätzlicher Effekte geschaffen wird.

Die erfindungsgemäße Lösung ermöglicht alternativ eine variable oder eine konstante Belichtung des Laufbildfilms durch gemeinsame oder getrennte Vorgabewerte für die Filmtransportgeschwindigkeit und den Blendenöffnungswinkel über den gesamten Geschwindigkeitsbereich der Laufbildkamera.

Darüberhinaus stellt die erfindungsgemäße Steuer- und Regeleinrichtung ein hohes Maß an Bedienungsfreundlichkeit sicher, da sowohl die Transportgeschwindigkeit als auch der Blendenöffnungswinkel vorprogrammiert und gespeichert werden können, so daß bestimmte, vorgegebene Bildaufnahmesequenzen vor der Aufnahme eingegeben und im Filmaufnahmebetrieb sequentiell als Abfolge von Programmschritten unterschiedlicher Filmtransportgeschwindigkeit und Blendenöffnungswinkel abgerufen werden können. Damit hat der Kameramann die freie Wahl einer gewünschten Belichtungsfunktion, ohne daß er sich auf die Einstellung der gewünschten Belichtungsfunktion konzentrieren muß und somit von der Beobachtung des Motivs durch den Kamerasucher abgelenkt wird.

Vorteilhafte Ausgestaltungen der erfindungsgemäßen Lösung sind den Unteransprüchen zu entnehmen.

Anhand eines in der Zeichnung dargestellten Ausführungsbeispieles soll der der Erfindung zugrundeliegende Gedanke näher erläutert werden. Es zeigen:
- Figur 1: ein Blockschaltbild einer Anordnung zur Steuerung der Belichtung und Transportgeschwindigkeit eines Laufbildfilms;
- Figur 2: eine zeitliche Darstellung eines Ablaufprogramms für verschiedene Transportgeschwindigkeiten und Blendenöffnungswinkel;
- Figur 3: eine schematisch-perspektivische Darstellung einer verstellbaren Umlaufblende mit zugehöriger Steuerung und
- Figur 4: eine perspektivische Darstellung des Bedienungsteils einer Fernbedienungseinheit.
- Figur 5: eine Draufsicht auf eine Fernbedienungseinheit mit koaxialen Potentiometern;
- Figur 6: einen Schnitt durch die Fernbedienungseinheit gemäß Figur 3 entlang der Linie A-A;
- Figur 7: eine Draufsicht auf eine erste Fernbedienungseinheit mit elektrischer bzw. elektronischer Kopplung der Stellglieder für Vorgabewerte der Transportgeschwindigkeit und des Blendenöffnungswinkels und
- Figur 8: eine Draufsicht auf eine zweite Fernbedienungseinheit mit elektrischer bzw. elektronischer Kopplung der Stellglieder für die Vorgabewerte der Transportgeschwindigkeit und des Blendenöffnungswinkels.

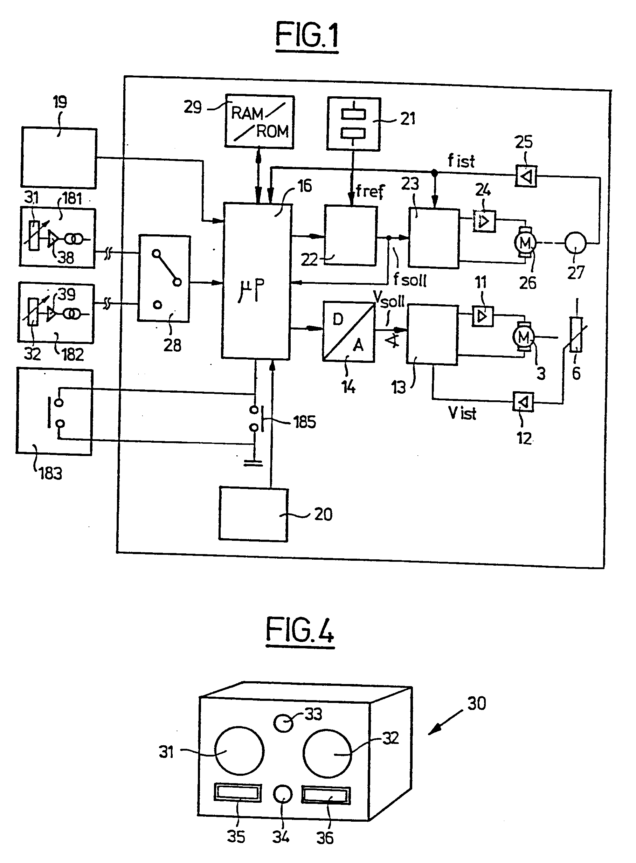

Das in Figur 1 dargestellte Blockschaltbild zeigt die wesentlichen Bausteine zur Realisierung einer Steuer- und Regeleinrichtung für die Steuerung der Belichtung und Transportgeschwindigkeit eines Laufbildfilms in einer Laufbildkamera.

In der in Figur 1 dargestellten Anordnung ist ein von einem Verstärker 24 angesteuerter Filmtransportmotor 26 zum Transport des Laufbildfilmes vorgesehen, der über ein Getriebe mit einem entsprechenden Greiferschaltwerk verbunden ist. Zusätzlich ist die Antriebswelle des Filmtransportmotors 26 fest mit einer Winkelgeberscheibe 27 verbunden, so daß mittels einer opto-elektronischen PositionsAbtasteinrichtung die Rotationsgeschwindigkeit bzw. -frequenz und gegebenenfalls die exakte Stellung des Filmtransportmotors 26 erfasst und über einen Vertärker 25 an einen Drehzahlregler 23 weitergeleitet werden kann.

Der Istwert fᵢₛₜ der Transportgeschwindigkeit wird sowohl dem Drehzahlregler 23 als auch einem Zentralprozessor 16 zugeführt. Der Drehzahlregler 23 ist zusätzlich mit einem Sollwert der Transportgeschwindigkeit fₛₒₗₗ beaufschlagt. Dieser Sollwert wird von einem Syntheziser 22 abgegeben, dessen Eingänge sowohl mit einem Oszillator 21, der eine Referenzfrequenz f_{ref} an den Synthesizer 22 abgibt als auch mit einem Ausgang des Zentralprozessors 16 verbunden.

Die Sollfrequenz fₛₒₗₗ der Transportgeschwindigkeit wird zusätzlich auf einen Eingang des Zentralprozessors 16 zurückgekoppelt.

Der Drehzahlregler 23 führt sowohl eine Geschwindigkeitsregelung in Abhängigkeit von dem vom Synthesizer abgebenen Stellwert als auch einen Phasenvergleich zwischen dem Istwert und dem Sollwert des Phasenwinkels durch.

Ein Sollwert des Blendenöffnungswinkels Vₛₒₗₗ wird von dem Zentralprozessor 16 über einen Digital/AnalogWandler 14 an einen Positionsregler 13 abgegeben, der zusätzlich mit einem Istwert Vist des Blendenöffnungswinkels beaufschlagt ist. Über einen Verstärker 11 steuert der Positionsregler einen Blendenverstellmotor 3 an, der vorzugsweise mit der Umlaufblendenwelle verbunden ist, mit der Umlaufblende rotiert und bei entsprechender Ansteuerung durch den Positionsregler eine Relativbewegung des Blendenverstellflügels in Bezug auf die rotierende Umlaufblende bewirkt.

Der Blendenverstellflügel ist mit einem Potentiometer 6 verbunden, das ein der Stellung des Blendenverstellflügels in Bezug auf die Umlaufblende entsprechendes Signal sowohl im Stillstand als auch im Lauf über einen zweiten Verstärker 12 an den Positionsregler 13 abgibt.

Zusätzlich kann im Bereich der verstellbaren Umlaufblende ein optischer Sensor 20 angeordnet werden, der im Lauf der verstellbaren Umlaufblende den jeweiligen Blendenöffnungswinkel, d.h. die öffnungszeit der Umlaufblende erfaßt und an eine weiteren Eingang des Zentralprozessors 16 abgibt, so daß Systemtoleranzen eliminiert werden und eine zusätzliche Vergleichseingabe in digitaler Form an den Zentralprozessor 16 bewerkstelligt wird.

Der Zentralprozessor 16 ist mit einem Speicher 29 verbunden, der vorzugsweise aus einem Festwertspeicher und einem Speicher mit wahlfreiem Zugriff besteht. Ein zusätzlicher Eingang des Zentralprozessors 16 ist über einen Multiplexer 28 mit einer externen Fernbedienungseinheit 30; 181, 182, 183 verbunden, über die Sollwerte für die Transportgeschwindigkeit und den Blendenöffnungswinkel eingestellt werden können, die mittels einer Programmtaste 33 an der Fernbedienungseinheit bzw. einer Programmtaste 185 an der Laufbildkamera ausgelöst werden.

Über eine serielle oder parallele Schnittstelle ist der Zentralprozessor 16 mit einem Programmiergerät 19 verbindbar, mit dem Sollwerte der Transportgeschwindigkeit und des Blendenöffnungswinkels vorprogrammierbar sind.

Die vorprogrammierten Daten enthalten vorzugsweise Anfangs- und Endwerte der Transportgeschwindigkeit und des Blendenöffnungswinkels sowie der Zeit, innerhalb der die Änderung erfolgen soll. Die mittels des Programmiergerätes 19 eingegebenen Daten werden im Speicher 29 gespeichert und mit der Programmtaste 185 an der Laufbildkamera bzw. der Programmtaste 33 an der Fernbedienungseinheit als Abfolge von Programmschritten unterschiedlicher Transportgeschwindigkeit und unterschiedlichen Blendenöffnungswinkels ausgelöst.

Über die Fernbedienungseinheit 30; 181, 182, 183 oder über ein mit der Laufbildkamera verbindbares Modul können sowohl der Blendenöffnungswinkel als auch die Transportgeschwindigkeit verändert werden. Die an den Stromquellen der Fernbedienungseinheit 30; 181, 182, 183 eingestellten Werte werden über einen Analog/Digital-Wandler an den Zentralprozessor 16 abgegeben, der den digitalen Wert des Blendenöffnungswinkels an den Digital/Analog-Wandler 14 für die Regelung des Blendenöffnungswinkels weiterleitet.

Ebenfalls über Analog/Digital-Wandler erhält der Zentralprozessor 16 einen Wert der Transportgeschwindigkeit, mit dem er den nachgeschalteten Synthesizer 22 mit einem festen digitalen Wert stabil einstellt.

Bei dem Synthesizer 22 handelt es sich um einen Regler, der mit einer von dem Oszillator 21 abgegebenen quarzstabilen Referenzfrequenz beaufschlagt ist und der somit die Transportgeschwindigkeit regelt. Infolge einer manuellen Verstellung der Transportgeschwindigkeit wird die von der Stromquelle der externen Fernbedienungseinheit abgegebene Stromstärke in digitale Werte umgewandelt, so daß eine quarzstabile Regelung über den Synthesizer 22 möglich ist.

Anstelle einer Analog/Digital-Umwandlung kann selbstverständlich auch ein Spannungs/Frequenz-Wandler verwendet werden.

Mit der Eingabe des Istwertes der Transportgeschwindigkeit in den Zentralprozessor 16 besteht eine einfache Möglichkeit, den jeweiligen Blendenöffnungswinkel zu ermitteln. Durch die Kenntnis der momentanen Transportgeschwindigkeit kann im Zentralprozessor 16 der jeweilige Blendenöffnungswinkel durch die über den optischen Sensor erfassten Werte jeder Geschwindigkeit ausgerechnet werden, so daß der Blendenöffnungswinkel z.B. auch in der Hochlaufphase überprüft und gegebenenfalls korrigiert werden kann.

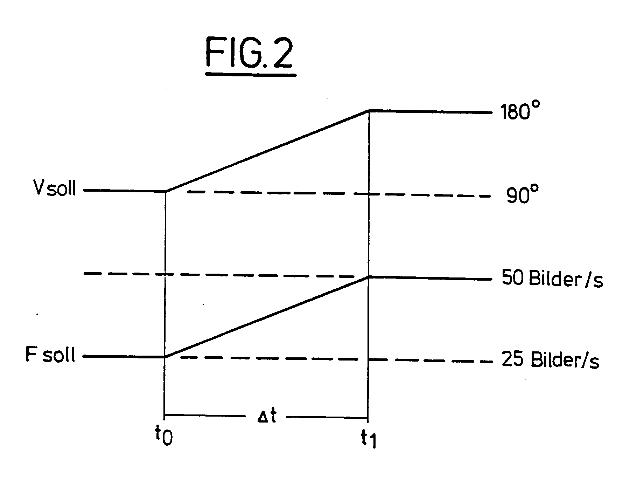

Figur 2 zeigt ein Beispiel eines Programmablaufs mit unterschiedlichen Transportgeschwindigkeit und unterschiedlichen Blendenöffnungswinkeln in Abhängigkeit von einer vorgegebenen Sollwertänderung.

Der in Figur 2 dargestellte Programmschritt zeigt bis zum Zeitpunkt t₀ einen Anfangs-Sollwert des Blendenöffnungswinkels Vₛₒₗₗ von bspw. 90° sowie einen Anfangs-Sollwert der Transportgeschwindigkeit fₛₒₗₗ von bspw. 25 Bildern pro Sekunde. Zum Zeitpunkt t₀ wird eine Änderung der Transportgeschwindigkeit und des Blendenöffnungswinkels ausgelöst, die in einen End-Sollwert von bspw. 180° für den Sollwert des Blendenöffnungswinkels Vₛₒₗₗ sowie einen Sollwert der Transportgeschwindigkeit fₛₒₗₗ von bspw. 50 Bildern pro Sekunde einmündet, die zum Zeitpunkt t₁ erreicht ist. Die vorgegebene Zeitspanne **Δ** t zur Änderung der Transportgeschwindigkeit und des Blendenöffnungswinkels beträgt bspw. 20 Sekunden.

Zusätzlich zu diesem einen Programmschritt können weitere Programmschritte ausgelöst werden, bspw. eine weitere Steigerung der Transportgeschwindigkeit bei vergrößertem Steigerung der Transportgeschwindigkeit bei vergrößertem Blendenöffnungswinkel bzw. eine Verringerung der Transportgeschwindigkeit und des Blendenöffnungswinkels auch unter den in Figur 2 dargestellten Anfangs-Sollwert von bspw. 90° Blendenöffnungswinkel und 25 Bildern pro Sekunde Transportgeschwindigkeit.

Neben einem Programm zur Einhaltung einer konstanten Belichtungszeit kann unabhängig von der Transportgeschwindigkeit eine Einstellung von Vorgabewerten für beliebige Blendenöffnungswinkel erfolgen, bspw. wenn spezielle Effekte erzielt werden sollen oder wenn die Aufnahmeobjekte mit unterschiedlichen Lichtquellen gefilmt werden.

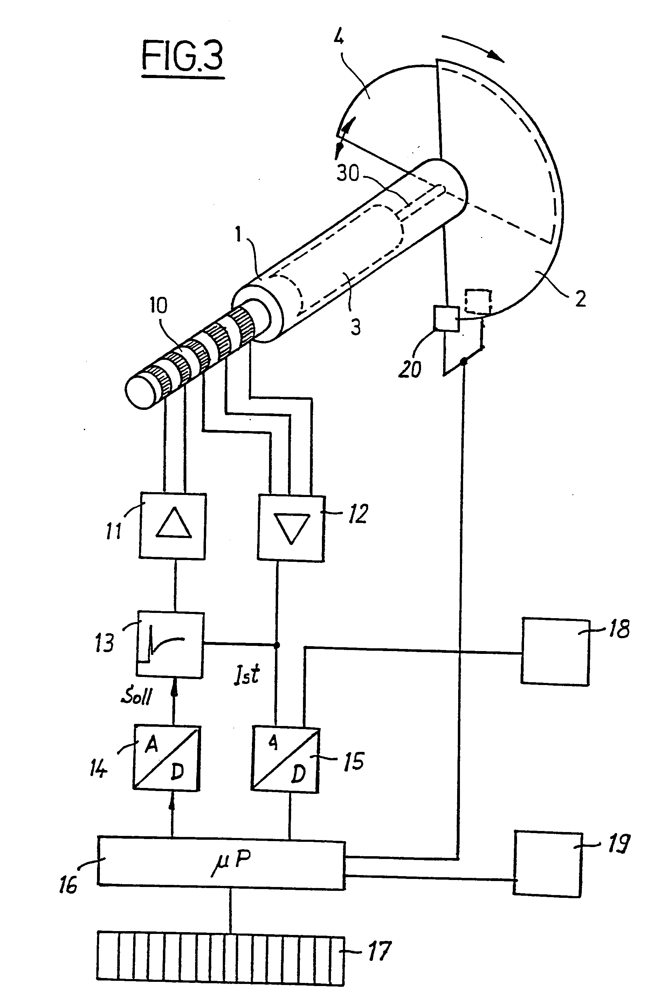

Figur 3 zeigt in schematisch-perspektivischer Darstellung die verstellbare Umlaufblende, die aus einer einteiligen Umlauf-Spiegelblende 2, die fest mit der Umlaufblendenwelle 1 verbunden ist, und einem verstellbaren Blendenverstellflügel 4 besteht, der über eine Verstellachse 30 mit einem mit der Umlaufblendenwelle 1 verbundenen Verstellmotor 3 gekoppelt ist. Die Umlaufblendenwelle 1 weist fünf Schleifringkontakte 10 auf, die zur Übertragung der Spannungsversorgung des Verstellmotors 3 sowie zur Übertragung eines die Stellung des Blendenverstellflügels 4 in Bezug auf die Umlaufblende 2 wiedergebenden Meßwertes dienen.

Zur Verstellung der Blendenöffnung bzw. des Blendenverstellsektors der Laufbildkamera muß der Verstellmotor 3 eine Relativbewegung zwischen der Umlaufblende 2 und dem Blendenverstellflügel 4 bewirken. Dies wird dadurch erreicht, daß der Verstellmotor 3 über die Schleifringkontakte 10 mit einer entsprechenden, ihn antreibenden Spannung versorgt wird, deren Polarität die Richtung der Verstellung des Blendenverstellflügels auf eine größere oder kleinere Blendenöffnung vorgibt.

Zwei der fünf Schleifringkontakte sind mit dem Verstellmotor 3 sowie mit dem Ausgang eines ersten Verstärkers 11 verbunden, dessen Eingang über einen PID-Regler 13 und einen Digital/Analog-Wandler 14 an den Zentralprozessor 16 angeschlossen ist.

Die drei verbleibenden Schleifringkontakte 10 sind einerseits mit einer Erfassungseinrichtung zur Erfassung des Blendenöffnungswinkels und andererseits mit dem Eingang Blendenöffnungswinkels und andererseits mit dem Eingang eines zweiten Verstärkers 12 verbunden, dessen Ausgang sowohl mit einem Analog/Digital-Wandler 15 als auch mit dem PID-Regler 13 verbunden ist.

An den Analog/Digital-Wandler 15 ist ein analoges Bedienungsgerät 18 angeschlossen. Der Ausgang des Analog/Digital-Wandlers 15 ist mit einem Eingang des Zentralprozessors 16 verbunden, der über weitere Eingänge mit dem Programmiergerät 19 sowie einer Lichtschranke 20 verbunden ist, die im Bereich der verstellbaren Umlaufblende 2, 4 angeordnet ist.

Ein weiterer Ausgang des Zentralprozessors 16 ist an eine Anzeigeeinrichtung 17 angeschlossen.

Zum Verstellen der Blendenöffnung der Laufbildkamera wird ein entsprechender Wert an dem analogen Bedienungsgerät 18 eingestellt oder über das Programmiergerät 19 vorgegeben, die beispielsweise eine Änderung der Blendenöffnung in Abhängigkeit von der Transportgeschwindigkeit der Laufbildkamera in Form einer rampenförmigen Verstellkurve vorgibt.

Der vorgegebene Sollwert wird über den Digital/Analog-Wandler 14 und den PID-Regler 13 sowie den ersten Verstärker 11 an die mit dem Verstellmotor 3 verbundenen Schleifringkontakte 10 abgegeben, so daß eine entsprechende Änderung der Spannungsversorgung des Verstellmotors 3 eine Relativbewegung des Blendenverstellflügels 4 gegenüber der Umlaufblende 2 bewirkt. Entsprechend dem jeweils eingestellten Wert führt der Verstellmotor 3 eine Relativbewegung zur rotierenden Umlaufblendenwelle 1 aus und bewegt dabei den Blendenverstellflügel 4 in Richtung auf einen größeren oder kleineren Sektor und damit in Richtung auf eine größere oder kleinere Blendenöffnung.

Eine mit der Umlaufblende 2 und dem Blendenverstellflügel 4 gekoppelte Erfassungseinrichtung gibt ein der jeweiligen Stellung des Blendenverstellflügels 4 in Bezug auf die Umlaufblende 2 entsprechendes Signal über drei der fünf Schleifringkontakte 10 an den zweiten Verstärker 12 und an den Analog/Digital-Wandler 15 an einen Eingang des Zentralprozessor 16 ab, der zum einen die jeweilige Winkelstellung des Blendenverstellflügels 4 auf der Anzeigeeinrichtung 17 zur Anzeige bringt bzw. in Verbindung mit dem vom analogen Bedienungsgerät 18 bzw. dem Programmiergerät 19 abgegebenen Vorgabewert dem Soll/Istwert-Vergleich zuführt.

Die zusätzliche Anordnung einer Lichtschranke im Bereich der Umlaufblende 2 bewirkt eine Messung der öffnungszeit der Umlaufblende 2 während deren Lauf durch den Zentralprozessor 16 und einen zusätzlichen Soll/Istwert-Vergleich, so daß eine Feinkorrektur vorgenommen wird, was dazu führt, daß die Genauigkeit der Blendenverstellung unabhängig von eventuellen Systemtoleranzen sichergestellt wird.

Die Verstellung der Blendenöffnung der Laufbildkamera kann wahlweise manuell, automatisch in Verbindung bspw. mit einem Belichtungsmesser oder programmiert entsprechend einem vorgegebenen Ablaufprogramm erfolgen. Auf diese Weise ist es möglich, die Blendenöffnung den jeweiligen Lichtverhältnissen anzupassen, bestimmte gewünschte Effekte zu erzielen oder die Blendenöffnung und damit die Belichtungszeit des Laufbildfilmes der jeweiligen Filmgeschwindigkeit anzupassen.

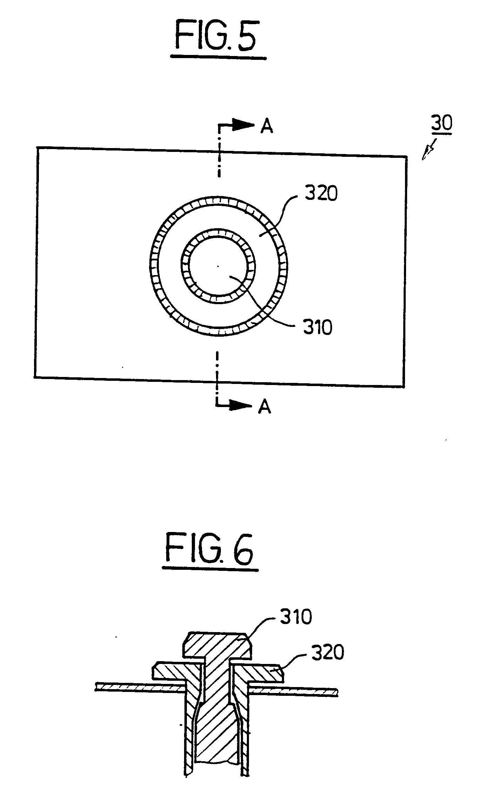

Figur 4 zeigt eine Fernbedienungseinheit zur Verbindung mit einer Laufbildkamera zur Einstellung von Vorgabewerten der Transportgeschwindigkeit und des Blendenöffnungswinkels sowie zur Auslösung vorgegebener und gespeicherter Programmschritte.

Die in Figur 4 schematisch-perspektivisch dargestellte Fernbedienungseinheit 30 ist über ein nicht näher dargestelltes Verbindungskabel oder über einen InfrarotUltraschall- oder Funksender und -empfänger mit einer Laufbildkamera verbunden.

Selbstverständlich kann die Fernbedienungseinheit 30 auch Teil einer Laufbildkamera sein bzw. als Modul in eine Laufbildkamera einsetzbar oder mit einer Laufbildkamera verbindbar sein. Die Fernbedienungseinheit 30 dient zur Einstellung von Vorgabewerten der Transportgeschwindigkeit und des Blendenöffnungswinkels sowie wahlweise zur Auslösung vorgegebener und gespeicherter Programmschritte.

Die Fernbedienungseinheit 30 enthält zwei Bedienungsknöpfe 31, 32, die mit Drehpotentiometern zur Einstellung eines Vorgabewertes der Transportgeschwindigkeit und des Blendenöffnungswinkels verbunden sind, die die in Figur 1 dargestellten Stromquellen 38, 39 steuern, so daß unterschiedliche Vorgabewerte der Transportgeschwindigkeit und des Blendenöffnungswinkels als Stromwerte vorgegeben werden. Eine Programmtaste 33, 185, die auch am Programmiergerät 19 angeordnet sein kann, dient dazu, bei nicht im Aufnahmebetrieb befindlicher Laufbildkamera ein gespeichertes Programm zu aktivieren bzw. bei zweifacher Betätigung ein gespeichertes Programm zu löschen.

Im Filmaufnahmebetrieb dient die Programmtaste 33 zur Aktivierung eines vorgegebenen Programmschrittes, so daß bspw. von Anfangs-Sollwerten der Transportgeschwindigkeit und des Blendenöffnungswinkels auf einen nachfolgenden Endwert innerhalb einer vorgegebenen Vorgabewerte-Änderungszeit umgeschaltet wird. Durch erneutes Betätigen der Programmtaste 33 wird der nächste Programmschritt ausgelöst usw..

Eine Aktivierungstaste 34 dient dazu, die Laufbildkamera aus dem Stillstand in den Filmaufnahmebetrieb zu bringen, so daß entweder der an den Bedienungsknöpfen 31, 32 eingestellte Vorgabewerte der Transportgeschwindigkeit oder des Blendenöffnungswinkels eingestellt oder ein Programmschritt ausgelöst wird.

Mittels zweier Umschalter 35, 36 besteht die Möglichkeit, eine interne Einstellung der Transportgeschwindigkeit und des Blendenöffnungswinkels bzw. eine externe Einstellung an der Fernbedienungseinheit 30 vorzugeben. Je nach Stellung der Umschalter 35, 36 wird somit eine programmgesteuerte Veränderung der Transportgeschwindigkeit oder des Blendenöffnungswinkels durchgeführt bzw. der an der Fernbedienungseinheit 30 mittels der Bedienungsknöpfe 310, 320 eingestellte Sollwert der Transportgeschwindigkeit bzw. des Blendenöffnungswinkels weitergeleitet und entsprechend eingestellt.

Ein zwischen den beiden Bedienungsknöpfen 31, 32 zur Einstellung der Transportgeschwindigkeit und des Blendenöffnungswinkels angeordnetes Zwischenrad dient zur mechanischen Kopplung der beiden Bedienungsknöpfe 31, 32, so daß bei einer Betätigung des Zwischenrades beide Bedienungsknöpfe gleichmäßig synchron verstellt werden. Auf diese Weise wird eine Zwangskopplung herbeigeführt, bei der die Vorgabewerte für die Transportgeschwindigkeit und den Blendenöffnungswinkel zeitgleich verändert werden. Dadurch wird eine konstante Belichtung über den gesamten Geschwindigkeitsbereich der Laufbildkamera sichergestellt und gleichzeitig eine vereinfachte Bedienung ermöglicht, bei der nur ein Bedienungselement, nämlich entweder das Zwischenrad oder einer der beiden Bedienungsknöpfe 31, 32 zu betätigen ist, um eine Veränderung der Transportgeschwindigkeit bzw. des Blendenöffnungswinkels herbeizuführen.

Das Zwischenrad ist axial verschiebbar so angeordnet, daß in einer unteren Stellung nur eine gemeinsame Verstellung der Bedienungsknöpfe 31, 32 zur Einstellung der Vorgabewerte für die Transportgeschwindigkeit und den Blendenöffnungswinkel über geeignete, mit den Bedienungsknöpfen 31, 32 verbundene Drehpotentiometer möglich ist, während in einer oberen Stellung, bei der das Zwischenrad axial von der Oberfläche der Fernbedienungseinheit 30 entfernt wird, die Bedienungsknöpfe 31, 32 freigegeben werden, so daß eine getrennte Verstellung der Vorgabewerte für die Transportgeschwindigkeit und den Blendenöffnungswinkel möglich ist.

Figur 5 zeigt eine Draufsicht auf eine koaxiale Anordung zweier mit Drehpotentiometern verbundener Bedienungsknöpfe 31, 32, während in Figur 6 ein Schnitt entlang der Linie A-A gemäß Figur 5 die Ausführungsform mit den koaxialen Bedienungsknöpfen 31, 32 darstellt, bei der die Verbindung beider Bedienungsknöpfe und damit die Kopplung beider mit den Bedienungsknöpfen 31, 32 verbundener Potentiometer durch Anheben des oberen Bedienungsknopfes 31 erfolgt, so daß durch kraftschlüssige Verbindung der untere Bedienungsknopf 32 mit dem oberen Bedienungsknopf 31 gekoppelt wird und bei einer Drehbewegung des oberen Bedienungsknopfes 31 der untere Bedienungsknopf 32 eine Zwangs-Drehbewegung durchführt.

Durch Herunterdrücken des oberen Bedienungsknopfes 31 wird die kraftschlüssige Zwangskopplung gelöst und damit eine getrennte Bedienung beider Bedienungsknöpfe 31, 32 ermöglicht, so daß eine getrennte Verstellung der Vorgabewerte der Transportgeschwindigkeit und des Blendenöffnungswinkels erfolgen kann.

Neben der kraftschlüssigen Kopplung beider Bedienungsknöpfe bzw. damit verbundener Potentiometer ist selbstverständlich auch eine formschlüssige Kopplung durch Einrasten der Bedienungsknöpfe in einer angehobenen oder eingedrückten Stellung eines der beiden Bedienungsknöpfe 31, 32 gemäß Figur 6 möglich.

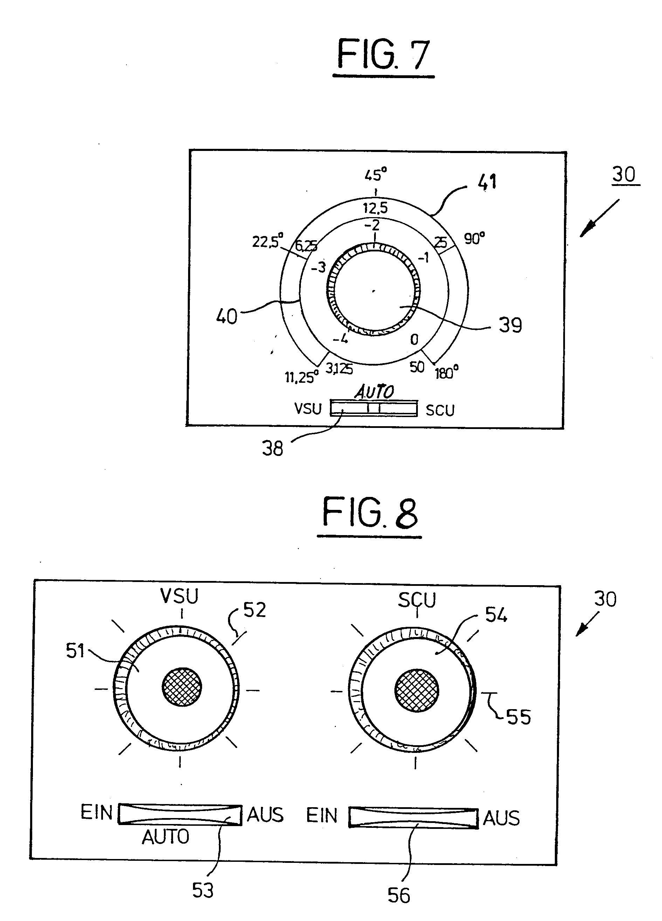

Figur 7 zeigt eine Draufsicht auf eine Fernbedienungseinheit 30 mit einer elektrischen bzw. elektronischen Kopplung der Stellglieder für die Einstellung der Vorgabewerte der Transportgeschwindigkeit und des Blendenöffnungswinkels.

In dieser Ausführungsform ist lediglich ein Bedienungsknopf 39 vorgesehen, mit dem wahlweise getrennt oder synchron der Sollwert für die Transportgeschwindigkeit und den Blendenöffnungswinkel verstellt werden kann.

Ein zusätzlich auf der Bedienungsoberfläche der Fernbedienungseinheit 30 angeordneter Umschalter 38 ist als dreipoliger Schalter ausgeführt und ermöglicht je nach Schalterstellung die Verstellung der Vorgabewerte für die Transportgeschwindigkeit VSU, die Veränderung des Vorgabewertes des Blendenöffnungswinkels SCU und die gemeinsame Verstellung beider Vorgabewerte AUTO zur Einstellung einer konstanten Belichtungszeit.

Wie der Darstellung gemäß Figur 7 zu entnehmen ist, sind um den Bedienungsknopf 39 zwei Skalen 40, 41 angeordnet, die Werte für die Transportgeschwindigkeit und den Blendenöffnungswinkel aufweisen.

Infolge der Kopplung der Transportgeschwindigkeit und des Blendenöffnungswinkels zur Sicherung einer ausreichenden Belichtungszeit für den Laufbildfilm sind spezielle Wertepaare beider Skalen 40, 41 einander zugeordnet, so daß bei einer gemeinsamen Verstellung der Vorgabewerte für die Transportgeschwindigkeit und den Blendenöffnungswinkel entsprechende Wertepaare abzulesen sind.

Bei einer getrennten Verstellung der Vorgabewerte für die Transportgeschwindigkeit und den Blendenöffnungswinkel gilt bei einer entsprechenden Stellung des Umschalters 38 die eine oder andere Skala 40, 41 zur Anzeige und Einstellung der gewünschten Transportgeschwindigkeit bzw. des gewünschten Blendenöffnungswinkels. Die Verstellung der Werte für die Transportgeschwindigkeit und den Blendenöffnungswinkel kann so erfolgen, daß bei vorgegebenen Werten ein Einrasten des Bedienungsknopfes 39 erfolgt, so daß an diesen Stellen spezielle Einstellwerte vorgegeben sind. Bei einer stufenlosen Verstellung sind die dazwischenliegenden Werte ohne Einrastelemente einstellbar, so daß eine beliebige Werteeinstellung zwischen der minimalen und maximalen Transportgeschwindigkeit und dem minimalen und maximalen Blendenöffnungswinkel möglich ist.

Figur 8 zeigt eine Draufsicht auf eine alternative Ausführungsform der elektrischen bzw. elektronischen Kopplung der Potentiometer.

Bei dieser Variante sind zwei getrennte Potentiometer mit Verstellknöpfen 51, 54 für die Transportgeschwindigkeit VSU und den Blendenöffnungswinkel SCU sowie zwei den beiden Potentiometern zugeordnete Schalter 53, 56 vorgesehen, von denen der eine, dem Potentiometer für die Transportgeschwindigkeit VSU zugeordnete Schalter 53 als dreipoliger Schalter ausgeführt ist, während der andere, dem Potentiometer für den Blendenöffnungswinkel SCU zugeordnete Schalter 56 ein zweipoliger Ein- und Ausschalter ist.

Diese Kombination ermöglicht folgende Betriebsarten:
1. VSU-Schalter 53 EIN, SCU-Schalter 56 EIN
   Getrennte Einstellung von Transportgeschwindigkeit und Blendenöffnungswinkel anhand der Skalen 52, 55
2. VSU-Schalter 53 EIN, SCU-Schalter 56 AUS
   Einstellung der Transportgeschwindigkeit und des Blendenöffnungswinkel bleibt konstant eingestellt
3. VSU-Schalter 53 AUS, SCU-Schalter 56 EIN
   Einstellung des Blendenöffnungswinkels, fest eingestellte Transportgeschwindigkeit -
4. VSU-Schalter 53 AUTO, SCU-Schalter 56 EIN oder AUS
   Unabhängig von der Stellung des SCU-Schalters 56 und der Einstellung des SCU-Potentiometers 54 wird in Abhängigkeit von der Stellung des VSU-Verstellknopfes 51 und damit des VSU-Potentiometers der Blendenöffnungswinkel so eingestellt, daß eine konstante Filmbelichtung erfolgt, d.h. die Belichtungszeit wird konstant gehalten.

## Patentansprüche

1. Steuer- und Regeleinrichtung für die Transportgeschwindigkeit eines Films sowie für den Blendenöffnungswinkel einer Umlaufblende (2) in einer Laufbildkamera, mit einer Vorrichtung (19) zur Eingabe und Speicherung von Daten zur Programmierung einer Bildaufnahmesequenz, wobei die Daten den Anfangs- und Endwert der Transportgeschwindigkeit, die Übergangszeit vom Anfangs- zum Endwert, sowie den Blendenoffnungswinkel umfassen und wobei der Blendenöffnungswinkel zur Aufrechterhaltung konstanter Belichtung während der Bildaufnahmesequenz nachführbar ist,
**dadurch gekennzeichnet,**
daß die Vorrichtung (19) zur Programmierung mehrerer Bildaufnahmesequenzen ausgebildet ist, daß ein Zentralprozessor (16) vorgesehen ist zur Durchführung folgender Betriebsarten der Kamera:
(a) Bildaufnahme mit variabler, voneinander unabhängiger Einstellung des Blendenöffnungswinkels und der Transportgeschwindigkeit;
(b) Bildaufnahme mit variabler Transportgeschwindigkeit und konstantem Blendenöffnungswinkel;
(c) Bildaufnahme mit konstanter Transportgeschwindigkeit und variablem Blendenöffnungswinkel;
(d) Bildaufnahme mit variabler Transportgeschwindigkeit und mit Nachführung des Blendenöffnungswinkels zur Aufrechterhaltung konstanter Belichtung,
und daß Mittel (29, 33) vorgesehen sind zur Auswahl von mindestens einer der Betriebsarten, sowie Mittel (181, 182) zur
Eingabe des Blendenöffnungswinkels und der Transportgeschwindigkeit in Abweichung von den programmierten Bildaufnahmesequenzen.

2. Steuer- und Regeleinrichtung nach Anspruch 1, **dadurch** **gekennzeichnet,** daß die Programmiervorichtung als externes Programmiergerät (19) ausgebildet ist.

3. Steuer- und Regeleinrichtung nach Anspruch 2, **dadurch** **gekennzeichnet,** daß für die Auswahl einer gespeicherten Bildaufnahmesequenz entweder eine Taste (185) an der Laufbildkamera oder eine mit der Laufbildkamera verbindbare Fernbedienungseinheit (30; 183) vorgesehen ist.

4. Steuer- und Regeleinrichtung nach einem der vorangehenden Ansprüche, **dadurch gekennzeichnet,** daß Mittel zum Auslösen mehrerer aufeinanderfolgender Bildaufnahmesequenzen vorgesehen sind.

5. Steuer- und Regeleinrichtung nach einem der vorangehenden Ansprüche, **dadurch gekennzeichnet,** daß ein Sollwert (Vₛₒₗₗ) für den Blendenöffnungswinkel an einen Positionsregler (13) und ein Sollwert (fₛₒₗₗ) für die Transportgeschwindigkeit an einen Drehzahlregler (23) in Abhängigkeit von dem Zentralprozessor (16) zugeführten Vorgabewerten für die Transportgeschwindigkeit und den Blendenöffnungswinkel abgegeben werden.

6. Steuer- und Regeleinrichtung nach Anspruch 5, **dadurch** **gekennzeichnet,** daß der Positionsregler (13) mit einem an der Umlaufblende (2) erfaßten Istwert (Vᵢₛₜ) beaufschlagt ist und in Abhängigkeit von der Regelabweichung ein Stellsignal an den die Umlaufblende (2) steuernden Verstellmotor (3) abgibt, und daß der Drehzahlregler (23) mit einem Istwertsignal (fᵢₛₜ) der Transportgeschwindigkeit beaufschlagt ist und in Abhängigkeit von der Regelabweichung ein Stellsignal an den Filmtransportmotor (26) abgibt.

7. Steuer- und Regeleinrichtung nach Anspruch 6, **dadurch** **gekennzeichnet,** daß ein Synthesizer (22) sowohl mit dem Istwertsignal (fᵢₛₜ) der Transportgeschwindigkeit als auch mit dem vom Zentralprozessor (16) abgegebenen Sollwert der Transportgeschwindigkeit und mit einer von einem Oszillator (21) abgegebenen Referenzfrequenz (f_{ref}) beaufschlagt ist und die Transportgeschwindigkeit durch Abgabe eines Sollwerts (fₛₒₗₗ) an den Drehzahlregler (23) regelt.

8. Steuer- und Regeleinrichtung nach einem der Ansprüche 2, 5 oder 7, **dadurch gekennzeichnet,** daß das externe Programmiergerät (19) über eine Schnittstelle mit dem Zentralprozessor (16) verbindbar ist, der die Daten der Bildaufnahmesequenzen in einem Speicher (29) ablegt und bei Betätigung einer Auslösetaste an den Synthesizer (22) bzw. über einen Digital/Analog-Wandler (14) an den Positionsregler (13) abgibt.

9. Steuer- und Regeleinrichtung nach einem der Ansprüche 3 bis 8, **dadurch gekennzeichnet,** daß die Fernbedienungseinheit (30; 181 bis 183) mit der Laufbildkamera über ein Verbindungskabel oder eine Infrarot- , Ultraschall- oder Funksende- und Funkempfangseinrichtung verbunden ist und mindestens einen Umschalter (35, 36) für die Auswahl des Programmablaufs der Laufbildkamera, eine Programmtaste (33) zur Auslösung eines gespeicherten Programmablaufs bzw. des an der Fernbedienungseinheit (30; 181, 182, 183) eingegebenen Vorgabwertes für die Transportgeschwindigkeit und den Blendenöffnungswinke1, sowie Stellglieder (31, 32) als Mittel zur Eingabe des Blendenöffnungswinkels und der Transportgeschwindigkeit in Abweichung vom ausgewählten Programmablauf aufweist.

10. Steuer- und Regeleinrichtung nach Anspruch 9, **dadurch** **gekennzeichnet,** daß die Stellglieder (31, 32) aus nebeneinander angeordneten oder koaxialen Potentiometern bestehen.

11. Steuer- und Regeleinrichtung nach Anspruch 10, dadurch **gekennzeichnet,** daß die Fernbedienungseinheit (30; 181 bis 183) den Potentiometern zugeordnete Schalter aufweist, wovon ein erster Schalter (53) dreipolig ausgebildet ist und in einer ersten Stellung das eine Potentiometer inaktiviert, in einer zweiten Stellung das eine Potentiometer aktiviert und in einer dritten Stellung eine elektrische Kopplung beider Stellglieder zur Einstellung einer konstanten Belichtungszeit herstellt, während ein dem anderen Potentiometer zugeordnete zweiter Schalter (56) zweipolig ausgebildet ist und in einer ersten Stellung das zugeordnete Potentiometer inaktiviert und in einer zweiten Stellung das Potentiometer aktiviert.

12. Steuer- und Regeleinrichtung nach Anspruch 11, **dadurch gekennzeichnet,** daß von den den Potentiometern zugeordneten Schaltern ein weiterer Schalter (38) dreipolig ausgebildet ist, wobei in einer ersten Stellung des Schalters (38) der Sollwert der Transportgeschwindigkeit (VSU), in einer zweiten Stellung des Schalters (38) der Sollwert des Blendenöffnungswinkels (SCU) und in einer dritten Stellung (AUTO) des Schalters (38) der Sollwert der Transportgeschwindigkeit (VSU) und des Blendenöffnungswinkels (SCU) synchron verstellbar sind.

## Claims

1. Control and regulator device for the transport speed of a film as well as for the shutter aperture angle of a rotary shutter (2) in a motion film camera, with a device (19) for the input and storage of data for programming a picture taking sequence wherein the data comprise the starting and end value of the transport speed, the transition time from the starting to the end value, as well as the shutter aperture angle and wherein the shutter aperture angle can be matched for maintaining constant exposure during the picture taking sequence,
characterised in that the device (19) is designed for programming several picture taking sequences, that a central processor (16) is provided for carrying out the following operations of the camera:
(a) taking pictures with variable independent adjustment of the shutter aperture angle and transport speed;
(b) taking pictures with variable transport speed and constant shutter aperture angle;
(c) taking pictures with constant transport speed and variable shutter aperture angle;
(d) taking pictures with variable transport speed and with matching of the shutter aperture angle to maintain constant exposure,
and that means (29, 33) are provided for the selection of at least one of the operations, as well as means (181, 182) for feeding in the shutter aperture angle and transport speed when different from the programmed picture taking sequences.

2. Control and regulator device according to claim 1 characterised in that the programming device is designed as an external programming apparatus (19).

3. Control and regulator device according to claim 2, characterised in that either a button (185) is provided on the motion picture camera or a remote control unit (30; 183) connectable with the motion picture camera is provided for selecting a stored picture taking sequence.

4. Control and regulator unit according to one of the preceding claims, characterised in that means are provided for triggering several successive picture taking sequences.

5. Control and regulator unit according to one of the preceding claims, characterised in that an ideal value (Vₛₒₗₗ) for the shutter aperture angle is sent to a position regulator (13), and an ideal value (fₛₒₗₗ) for the transport speed is sent to a speed regulator (23) in dependence on preset values supplied to the central processor (16) for the transport speed and shutter aperture angle.

6. Control and regulator device according to claim 5, characterised in that the position regulator (13) is biased with an actual value (Vᵢₛₜ) detected at the rotary shutter and in dependence on the regulating difference sends a setting signal to the adjustment motor (3) controlling the rotary shutter (2), and that the speed regulator (23) is biased with an actual value signal (fᵢₛₜ) of the transport speed and in dependence on the regulating difference sends a setting signal to the film transport motor (26).

7. Control and regulator device according to claim 6, characterised in that a synthesizer (22) is biased both with the actual value signal (fᵢₛₜ) of the transport speed and with the ideal value (fₛₒₗₗ) of the transport speed delivered from the central processor (16) and with a reference frequency (f_{ref}) delivered by an oscillator (21) and regulates the transport speed through sending an ideal value (fₛₒₗₗ) to the speed regulator (23).

8. Control and regulator device according to one of claims 2, 5 or 7, characterised in that the external programming apparatus (19) is connectable by an interface with the central processor (16) which stores the data of the picture taking sequences in a memory (29) and during operation of a shutter release button sends the data to the synthesizer (22) or through a digital/analog converter (14) to the position regulator (13).

9. Control and regulator device according to one of claims 3 to 8 characterised in that the remote control unit (30; 181 to 183) is connected to the motion film camera via a connecting cable or an infrared, ultrasonic or radio transmitter/receiver unit and has at least one converter switch (35, 36) for selecting the program sequence of the motion film camera, a program button (33) for releasing a stored program sequence or preset value for the transport speed and shutter aperture angle fed into the remote control unit (30; 181, 182, 183), as well as setting members (31, 32) as means for feeding in the shutter aperture angle and transport speed when different from the selected program sequence.

10. Control and regulator unit according to claim 9, characterised in that the setting members (31, 32) consist of potentiometers mounted side by side or coaxial.

11. Control and regulator unit according to claim 10, characterised in that the remote control unit (30; 181 to 183) has switches associated with the potentiometers, of which a first switch (53) is tri-polar and in a first position inactivates the one potentiometer, in a second position activates the one potentiometer and in a third position produces an electric coupling of the two setting members in order to set a constant exposure time, whilst a second switch (56) associated with the other potentiometer is bi-polar and in a first position inactivates the associated potentiometer and in a second position activates the potentiometer.

12. Control and regulator according to claim 11 characterised in that the remote control unit (30; 181 to 183) has switches associated with the potentiometers of which a further switch (38) is tri-polar wherein in a first position of the switch (38) the ideal value of the transport speed (VSU), in a second position of the switch (38) the ideal value of the shutter aperture angle (SCU) and in a third position (AUTO) of the switch (38) the ideal value of the transport speed (VSU) and of the shutter aperture angle (SCU) are adjustable in synchronization.

## Revendications

1. Dispositif de commande et de réglage pour la vitesse de transport d'un film ainsi que pour l'angle d'ouverture de l'obturateur d'un obturateur rotatif (2) dans une caméra cinématographique, avec un dispositif (19) pour introduire et mettre en mémoire des données pour la programmation d'une séquence de prises de vues, dans lequel les données comprennent les valeurs finales et initiale de la vitesse de transport, le temps de transition de la valeur initiale à la valeur finale ainsi que l'angle d'ouverture de l'obturateur , et dans lequel l'angle d'ouverture de l'obturateur peut être modifié pendant la séquence de prises de vues pour maintenir l'éclairement constant,
caractérisé en ce que le dispositif (19) est conçu pour la programmation de plusieurs séquences cinématographiques, en ce qu'un processeur central (16) est prévu pour réaliser les modes de fonctionnement suivants de la caméra :
(a) prises de vues avec réglage de l'angle d'ouverture de l'obturateur et de la vitesse de transport, de manière variable et indépendamment l'une de l'autre.
(b) prises de vues avec vitesse de transport variable et angle d'ouverture de l'obturateur constant;
(c) prises de vues avec vitesse de transport constante et angle d'ouverture de l'obturateur variable;
(d) prises de vues avec vitesse de transport variable et avec adaptation de l'angle d'ouverture de l'obturateur pour maintenir l'éclairement constant,
et en ce que des moyens (29, 33) sont prévus pour choisir au moins un des modes de fonctionnement, ainsi que des moyens (181, 182) pour introduire l'angle d'ouverture de l'obturateur et la vitesse de transport suivant des valeurs différant de la séquence de prises de vues programmée.

2. Dispositif de commande et de réglage selon la revendication 1, caractérisé en ce que le dispositif de programmation se présente sous forme d'un appareil de programmation externe (19).

3. Dispositif de commande et de réglage selon la revendication 2,caractérisé en ce qu'il est prévu,pour le choix d'une séquence de prises de vues mises en mémoire,soit une touche (185) sur la caméra cinématographique, soit une unité de télécommande (30, 183) pouvant être connectée à la caméra cinématographique.

4. Dispositif de commande et de réglage selon l'une des revendications précédentes, caractérisé en ce qu'il est prévu des moyens pour provoquer plusieurs séquences cinématographiques successives.

5. Dispositif de commande et de réglage selon l'une des revendications précédentes, caractérisé en ce qu'une valeur de consigne (Vₛₒₗₗ) pour l'angle d'ouverture de l'obturateur est appliquée à un régulateur de position (13) et une valeur de consigne (fₛₒₗₗ) pour la vitesse de transport à un régulateur de vitesse de rotation (23), en fonction des valeurs prédéterminées introduites dans le processeur central (16) pour la vitesse de transport et pour l'angle d'ouverture de l'obturateur.

6. Dispositif de commande et de réglage selon la revendication 5, caractérisé en ce que le régulateur de position (13) reçoit une valeur réelle (Vᵢₛₜ) déterminée pour l'obturateur rotatif (2) et envoie, en fonction de l'écart de réglage, un signal de réglage au moteur de réglage (3) commandant l'obturateur rotatif (2), et en ce que le régulateur de vitesse de rotation (23) reçoit un signal de valeur réelle (fᵢₛₜ) de la vitesse de transport et envoie au moteur de transport de film (26) un signal de réglage en fonction de l'écart de réglage.

7. Dispositif de commande et de réglage selon la revendication 6, caractérisé en ce qu'un synthétiseur (22) reçoit un signal de valeur réelle (fᵢₛₜ) de la vitesse de transport ainsi que la valeur de consigne (fₛₒₗₗ) fournie par le processeur central (16) pour la vitesse de transport et une fréquence de référence (f_{ref}) fournie par un oscillateur (21) et règle la vitesse de transport en envoyant une valeur de consigne (fₛₒₗₗ) au régulateur de vitesse de régulation (23).

8. Dispositif de commande et de réglage selon l'une des revendications 2, 5 ou 6, caractérisé en ce que l'appareil de programmation externe (19) peut être connecté par une interface au processeur central (16) qui envoie les données de la séquence de prises de vues dans une mémoire (29) et qui, lorsqu'on actionne une touche de déclenchement, les fournit au synthétiseur (22) ou, par un convertisseur numérique/analogique (14), au régulateur de position (13).

9. Dispositif de commande et de réglage selon l'une des revendications 3 à 8, caractérisé en ce que l'unité de télécommande (30, 181 à 183) est connectée à la caméra cinématographique par un câble de liaison ou par un dispositif émetteur et récepteur à infrarouges, à ultrasons ou radiophonique et présente au moins un commutateur (35, 36) pour choisir le déroulement du programme de la caméra cinématographique, une touche de programmation (33) pour provoquer le déroulement du programme mis en mémoire ou la valeur prédéterminée introduite dans l'unité de télécomande (30, 181, 182, 183) pour la vitesse de transport et pour l'angle d'ouverture de l'obturateur, ainsi que des éléments de réglage (31, 32) servant de moyens pour introduire des valeurs de l'angle d'ouverture de l'obturateur et de la vitese de transport différant du déroulement du programme choisi.

10. Dispositif de commande et de réglage selon la revendication 9, caractérisé en ce que les éléments de réglage (31, 32) sont constitués de potentiomètres disposés les uns à côté des autres ou coaxialement.

11. Dispositif de commande et de réglage selon la revendication 10, caractérisé en ce que l'unité de télécommande (30; 181 à 183) présente des commutateurs correspondant aux potentiomètres, dont un premier commutateur (53) est de type tripolaire et rend inactif un potentiomètre dans une première position, rend actif un potentiomètre dans une deuxième position et, dans une troisième position, réalise un couplage électrique des deux éléments de réglage pour réaliser un temps d'éclairement constant, tandis qu'un autre commutateur (56) correspondant à l'autre potentiomètre est de type bipolaire et rend inactif le potentiomètre correspondant dans une première position et active le potentiomètre dans la deuxième position.

12. Dispositif de commande et de réglage selon la revendication 11, caractérisé en ce qu'un autre commutateur (38) parmi les commutateurs correspondant aux potentiomètres est de type tripolaire tandis que, dans une première position du commutateur (38), la valeur de consigne de la vitesse de transport (VSU) peut être réglée en synchronisme, que, dans une deuxième position du commutateur (38), c'est la valeur de consigne de l'angle d'ouverture de l'obturateur (SCU) qui est réglée en synchronisme et que, dans une troisième position (AUTO) du commutateur (38), la valeur de consigne de la vitesse de transport (VSU) et de l'angle d'ouverture de l'obturateur (SCU) peut être réglée en synchronisme.
